Europäisches Patentamt

European Patent Office

Office européen des brevets

(19)

(11) Veröffentlichungsnummer: **0 219 068**
**B1**

(12)

# EUROPÄISCHE PATENTSCHRIFT

(45) Veröffentlichungstag der Patentschrift:
**12.04.89**

(51) Int. Cl.⁴: **F 16 L 59/02** // B29C53/56

(21) Anmeldenummer: **86114029.1**

(22) Anmeldetag: **09.10.86**

(54) Im Filament-Winding-Verfahren hergestelltes Isolierstoffrohr.

(30) Priorität: **18.10.85 DE 3537142**

(43) Veröffentlichungstag der Anmeldung:
**22.04.87 Patentblatt 87/17**

(45) Bekanntmachung des Hinweises auf die Patenterteilung:
**12.04.89 Patentblatt 89/15**

(84) Benannte Vertragsstaaten:
**AT BE CH DE FR GB LI NL SE**

(56) Entgegenhaltungen:
**EP-A- 0 141 303**
**DD-A- 210 234**
**DE-A- 2 264 341**
**DE-B- 1 120 120**

(73) Patentinhaber: **MASCHINENFABRIK REINHAUSEN GMBH, Postfach 120360, D-8400 Regensburg (DE)**

(72) Erfinder: **Bleibtreu, Alexander, Wöhrdstrasse 7, D-8400 Regensburg (DE)**

## Beschreibung

Die Erfindung bezieht sich auf ein im Filament-Winding-Verfahren hergestelltes Isolierstoffrohr gemäß Oberbegriff des Patentanspruches.

Isolierstoffrohre aus glasfaserverstärkten Kunststoffen werden seit vielen Jahren in der Hochspannungstechnik mit Erfolg als Isoliermaterial in verschiedenen flüssigen und gasförmigen Isoliermedien verwendet. Sie werden je nach ihrem Einsatz insbesondere in axialer Richtung dielektrisch beansprucht. Bei Verwendung solcher Isolierstoffrohre in Schwefelhexafluorid dürfen jedoch die üblicherweise als Armierung verwendeten Glasfaser-Rovings mit dem Schwefelhexafluorid nicht in Kontakt kommen, da die Silikate von den unter Lichtbogeneinwirkung entstehenden Zersetzungsprodukten des Schwefelhexafluorids angegriffen werden. Deshalb werden für diese Fälle zur Armierung der Harzmatrix z.B. aus Polyesterfaser hergestellte Rovings verwendet. Allerdings sind diese Isolierstoffrohre wegen der hohen Kosten der Polyester-Rovings sehr teuer, und sie haben außerdem den Nachteil, daß bei Temperaturen ab etwa 90°C der E-Modul des Laminats stark absinkt.

Bei anderen, den sogenannten vakuumimprägnierten Isolierstoffrohren wird zuerst ein Trockenwickel an der Innenschicht mit Polyestervlies versehen, dann mit Glasgewebebahnen aufgewickelt und der Rohwickel an der Außenseite mit Polyestergewebebahnen oder Polyestervlies abgeschlossen. Der so aufgebaute Trockenwickel wird dann in einer geschlossenen Form unter Vakuum mit Harz getränkt und unter Temperatur ausgehärtet. Bei den vakuumimprägnierten Isolierstoffrohren werden auch andere organische Faserstoffe für den Trockenwickel verwendet. So werden einfach übereinandergelegte Bahnen aus Aramid- und Polyesterfaserstoffen spiralförmig in einem gleichmäßigen Wechsel der einzelnen Aramid- und Polyesterlagen verwendet (DD-PS 210 234). Bei dem Verfahren der Vakuumimprägnierung handelt es sich jedoch um ein aufwendiges Verfahren. Ein weiterer Nachteil des so hergestellten Isolierstoffrohres liegt darin, dass die für den Trockenwickel verwendeten Gewebe eine gerichtete Struktur aufweisen und die einzelnen Rovings nach der Längsachse des Rohres und radial gerichtet sind. Ein solcher Aufbau ist bei kleinen Fehlern in der Benetzung der einzelnen Filamente hinsichtlich der Stoßspannungsfestigkeit sehr empfindlich.

Aufgabe der Erfindung ist es, unter Vermeidung des Verfahrens der Vakuumimprägnierung für die eingangs genannten Isolierstoffrohre eine weitere Verbesserung der mechanischen und der dielektrischen Eigenschaften und insbesondere auch der äußeren Oberfläche zu erzielen. Diese Aufgabe wird erfindungsgemäß durch die im Kennzeichen des Patentanspruches angegebenen Mittel gelöst.

Der mit der Erfindung erzielte Vorteil liegt zum einen in dem zusätzlichen Schutz auch der äußeren Oberfläche des Rohres ebenfalls gegen die Zersetzungsprodukte von $SF_6$ und zum anderen aber auch darin, daß eine sehr glatte äußere Oberfläche erzielt wird und daß eine weitere mechanische Verdichtung des Isolierstoffrohres erreicht wird, indem die außen aufgewickelte Polyesterlage beim Aushärten ein stärkeres Schrumpfverhalten zeigt als der aus den Glasrovings aufgebaute Kern der Rohrwand. Das neue Isolierstoffrohr kann im preisgünstigen Filament-Winding-Verfahren hergestellt werden, wobei der die mechanische Festigkeit bildende Wickelkern aus Glasfaserlaminat besteht, der sich hinsichtlich des E-Moduls bei höheren Temperaturen weitaus günstiger verhält als ein durchgehend mit Polyesterfaser gewickeltes Isolierstoffrohr.

Das neue Isolierstoffrohr wird dabei in vorteilhafter Weise wie folgt hergestellt: An der Innenseite des Rohres, d.h. unmittelbar auf dem Wickeldorn, wird eine ein- oder mehrlagige Schicht aus harzgetränktem Polyestervliesband, etwa 10% der Bandbreite überlappt, aufgewickelt. Auf diesem Wickel wird nochmals eine Reinharzschicht aufgebracht und anschließend in der gewünschten Dicke der Glaswickel aufgebaut. Danach werden die einzelnen Glasrovings abgeschnitten und mit Polyester-Rovings verknotet. Diese Knüpfstellen werden so gelegt, daß sie im Wickelkopf liegen. Anschließend wird der Polyesterfaserwickel entweder wie der Glasfaserwickel oder, wenn es aus mechanischen oder elektrischen Gründen notwendig sein sollte, mit anderer Steigung fertiggewickelt.

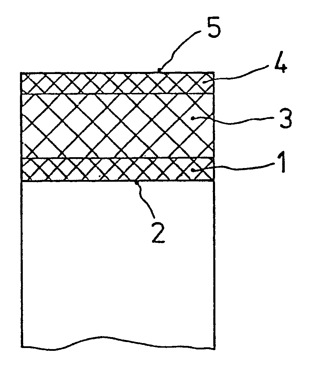

Die Figur zeigt als Beispiel in einem schematisch dargestellten Schnitt den Aufbau des Isolierstoffrohres: Einer ersten inneren mit Polyestervlies armierten Schicht 1, die zugleich die innere Oberfläche 2 des Isolierstoffrohres bildet, schließt sich der aus Glasrovings aufgebaute Kern 3 der Rohrwand an. Hierauf folgt eine dritte Schicht 4, die als Armierung gewickelte Polyesterrovings enthält und die zugleich die äußere Oberfläche 5 der Rohrwand bildet.

## Patentanspruch

Im Filament-Winding-Verfahren hergestelltes Isolierstoffrohr aus Mischlaminat, dessen Wand aus einer die innere Oberfläche (2) bildenden aus Polyestervlies aufgebauten Schicht (1), mit einer darüberliegenden aus Glasrovings aufgebauten Schicht (3), besteht, wobei harzgetränktes Vlies und harzgetränkte Rovings im kalten Zustand unmittelbar nacheinander auf einen Wickeldorn aufgebracht und durch anschließendes Erhitzen ausgehärtet sind, dadurch gekennzeichnet, daß die Rohrwand eine weitere die äußere Oberfläche (5) bildende Schicht (4) aus unmittelbar im Anschluß an den Glasrovings gewickelten Polyesterrovings enthält.

## Claim

Tube, which is of insulating material of a mixed laminate and manufactured in a filament-winding process and the wall of which consists of a layer (1), which is built up of polyester fleece and forms the inward surface (2), with a layer (3), which is built up of glass rovings and lying thereover, wherein resin-impregnated fleece and resin-impregnated rovings are brought one after the other in the cold state onto a winding mandrel and cured by subsequent heating, characterised thereby, that the tube wall contains a further layer (4), which forms the outward surface (5) and is of polyester rovings wound directly adjoining the glass rovings.

**Revendication**

Tube en matériau isolant fabriqué par enroulement de filaments à partir d'un stratifié composite, tube dont la paroi consiste en une couche (1) constituée par une nappe de polyester formant la surface interne (2) du tube, avec une couche (3) constituée par une stratification de fils de verre placée par dessus, la nappe imprégnée de résine et la stratification imprégnée de résine étant appliquées à froid, directement l'une après l'autre sur un mandrin de bobinage et étant durcies ensuite par chauffage, tube caractérisé en ce que la paroi de ce tube comprend une autre couche (4) formant la surface externe (5) du tube et constituée par une stratification de polyester enroulée directement à la suite sur la stratification de fils de verre.